# EUROPEAN PATENT APPLICATION

(11) **EP 2 669 780 A1**
(43) Date of publication of application: **04.12.2013**
(21) Application number: 12170086.8
(22) Date of filing: 30.05.2012
(51) Int. Cl.: G06F 3/048, G06F 17/24

(54) **Portable electronic device including a placeholder for an entry field and method of controlling same**

(71) Applicant: BlackBerry Limited, Waterloo, ON N2K 0A7 (CA)
(72) Inventor: Maltesson, Karl Gösta Malte, 223 61, Lund (SE)
(74) Representative: Moore, Barry

(57) **Abstract**

A method (202-212) includes displaying information (202) on a display (112)of an electronic device (100), the information comprising an entry field (404)and a placeholder (406) for the entry field, detecting a first interaction event (206) in relation to the entry field, and when the first interaction event is associated with a placeholder altering function (208), altering (210) the placeholder to maintain display of the placeholder for the entry field.

## Description

### FIELD OF TECHNOLOGY

The present disclosure relates to electronic devices including, but not limited to, portable electronic devices having entry fields and the control of placeholders for entry fields.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth^{®} capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and may have limited space for user input and output. The information displayed on the display may be modified depending on the functions and operations being performed.

Improvements in electronic devices with touch-sensitive displays are desirable.

### BRIEF DESCRIPTION OF THE DRAWINGS

Embodiments of the present disclosure will now be described, by way of example only, with reference to the attached figures, wherein:

FIG. 1 is a block diagram of a portable electronic device in accordance with an example;

FIG. 2 is a flowchart illustrating an example of a method of altering a placeholder for an entry field displayed on an electronic device;

FIG. 3 is a flowchart illustrating a further example of a method of altering a placeholder for an entry field displayed on an electronic device; and

FIG. 4 through FIG. 12B are views illustrating examples of altering a placeholder for an entry field displayed on an electronic device in accordance with the methods of FIG. 2 and FIG. 3.

### DETAILED DESCRIPTION

The following describes an electronic device and method including displaying information on a display of an electronic device, the information comprising an entry field and a placeholder for the entry field, detecting a first interaction event in relation to the entry field, and when the first interaction event is associated with a placeholder altering function, altering the placeholder to maintain display of the placeholder for the entry field.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device as described herein. Examples of electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may also be a portable electronic device without wireless communication capabilities, such as a handheld electronic game device, digital photograph album, digital camera, media player, e-book reader, and so forth.

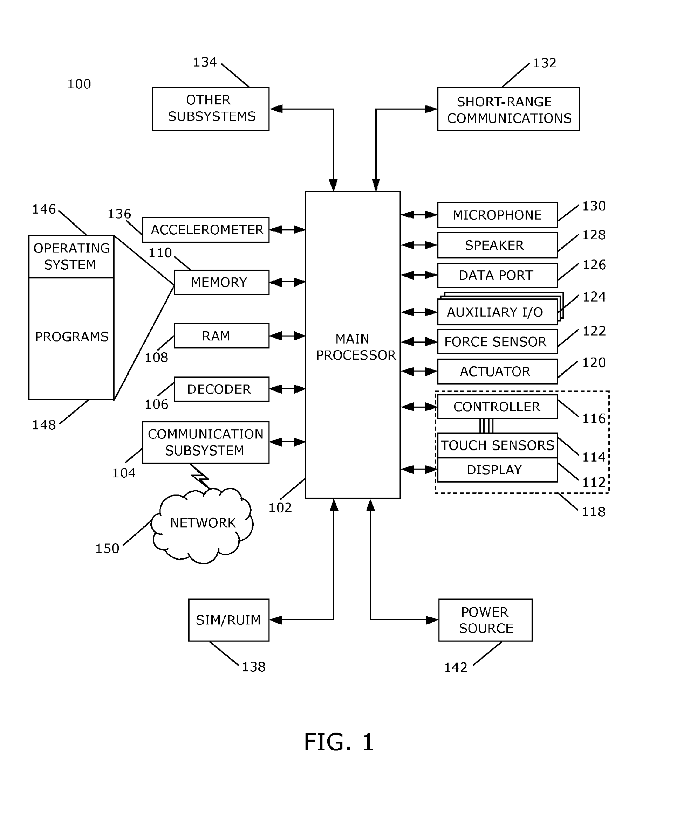

A block diagram of an example of a portable electronic device 100, also referred to as an electronic device 100 or a device 100, is shown in FIG. 1. The electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, an optional actuator 120, an auxiliary input/output (I/O) subsystem 124, a data port 126, a speaker 128, a microphone 130, short-range communications 132 and other device subsystems 134. The touch-sensitive display 118 includes a display 112 and touch sensors 114 that are coupled to at least one controller 116 utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. Optionally, the processor may interact with one or more force sensors 122.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing. The processor 102 may also interact with an accelerometer 136 to detect direction of gravitational forces or gravity-induced reaction forces that may determine the tilt of the portable electronic device 100.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth. A capacitive touch-sensitive display includes one or more capacitive touch sensors 114. The capacitive touch sensors may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at generally unchanged location over a period of time or a touch associated with the same selection item for a period of time.

Optional force sensors 122 may be disposed in conjunction with the touch-sensitive display 118 to determine or react to forces applied to the touch-sensitive display 118. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information associated with a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

Forms, such as online or web forms, typically include entry fields and labels describing the input, particularly text input, to be entered in each entry field. Common forms include such entry fields and corresponding labels as "Name", "Email", "Mobile Number", "User ID", "Password", etc. Such forms may be used to sign-in to online services, to complete online orders, to provide address or contact information, to submit search queries, and the like. Such forms may also be used to provide information to applications such as a calendar, contacts or address book applications. In this specification, an entry field, also referred to as a text field, text box, or input element, is a graphical user interface element that receives entered text input or character input from the user. The entry field may be a single-line or multi-line entry field.

In laying out an online form, entry fields and labels are commonly considered separate user interface elements and organized and assigned discrete space on the display. For long forms with many entry fields and labels, laying out many such elements may be cumbersome.

Prior form layouts include a label positioned on the same line adjacent to the entry field. For mobile devices with small screens, this layout may be disadvantageous because the available space for entering text input is small.

Other prior form layouts include a label within the entry field, also referred to as a placeholder, in-field label, or text hint. The HTML5 Vocabulary and API specification indicates that a "placeholder" attribute is used to represent a short hint (a word or short phrase) intended to aid the user with data entry. A hint may be a sample value or a brief description of the expected format. The HTML5 specification provides that the placeholder attribute, if specified, include a value that contains no "LF" (U+000A) or "CR" (U+000D) characters. According to the HTML5 specification, the hint may be presented to the user, after having stripped line breaks from the hint, when the element's value is the empty string and/or the element is not focused (e.g. by displaying the hint inside a blank unfocused control and hiding the hint otherwise). For a longer hint or other advisory text, the title attribute is more appropriate, according to the HTML5 specification.

Accordingly, some prior implementations of forms remove the placeholder before the user enters desired text input. As noted above, the placeholder may disappear upon selection of the entry field (receiving focus) or receipt of text input (in which case, the text input typically replaces the placeholder). Upon removal of the placeholder, the user may be provided with no visual hint or clue to know what text input to enter and the user may struggle to recall what text input is expected. Upon later viewing of the text input, and without a placeholder, the user may not be able to determine readily if the text input is appropriate for the entry field.

An improved user interface or a useful alternative is desirable.

Advantageously, the placeholder may be retained and altered within an entry field when the entry field is selected and receives text input. While editing or entering text input, the user is not required to remember what input is being requested when the placeholder is retained. Furthermore, while viewing previously entered text input, it is apparent to the user whether the text input is appropriate for the entry field when the placeholder is retained. Moreover, combining a label and an entry field into one combined element that shares a common space may lead to simpler layouts or designs. For example, a contacts or address book application may provide entry fields and placeholders that readily identify and label, through the use of placeholders that are retained and altered, entry fields that are filled out for a given contact.

A selected entry field may receive text input from any suitable keyboard such as a QWERTY keyboard, QWERTZ keyboard, AZERTY keyboard, and so forth. The keyboard includes a plurality of virtual keys that are associated with characters, symbols, and the like, that may be entered utilizing the keyboard.

One or more entry fields and associated placeholders may be displayed in any suitable application such as, for example, a Web browser application. One or more entry fields and placeholders may be displayed for entry of information in other applications, such as a calendar application, a contacts or address book application, a word processing application, or any other suitable application.

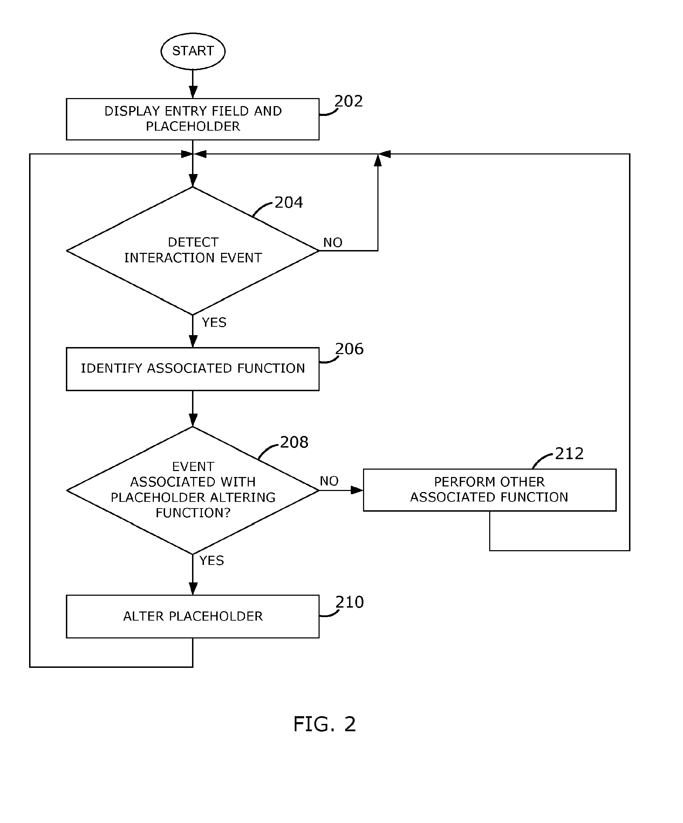

A flowchart illustrating examples of methods of altering a placeholder for an entry field displayed on an electronic device, such as the electronic device 100, is shown in FIG. 2. These methods may be carried out by software executed by, for example, processor 102. Coding of software for carrying out such a method is within the scope of a person of ordinary skill in the art given the present description. The methods may contain additional or fewer processes than shown and/or described, and may be performed in a different order. Computer-readable code executable by at least one controller or processor of the portable electronic device to perform the methods may be stored in a computer-readable storage medium, such as a non-transitory computer-readable medium.

Information including one or more entry fields and placeholders for the entry fields is displayed on the touch-sensitive display 118 at 202. When an interaction event is detected on the device at 204, the attributes of the interaction event are determined. The interaction event may be a command such as a touch, click, gesture, swipe, tabbing navigation, or the like, that selects an entry field. In some examples, where an entry field is already selected, such as the first entry field in a form, the interaction event may be receipt of text input for the entry field. A selected entry field may receive input from a keyboard or other manner of text input entry, and the entered text may be displayed in the entry field. A selected entry field is typically indicated by a cursor, such as a flashing or steady vertical bar or caret, to indicate where text input is placed when entered. The attributes of the interaction event may include the location of the command, if applicable, and the text input for the entry field, when the entry field is already selected.

The interaction event may be associated with a function and the function is identified at 206 of FIG. 2. The function associated with the interaction event may be dependent on the attributes of the interaction event. For example, an interaction event may be associated with a placeholder altering function to alter the placeholder to maintain display of the placeholder for the entry field by, for example, reducing the font size of the placeholder, repositioning the placeholder, or both reducing the font size of the placeholder and repositioning the placeholder. Alternatively, an interaction event may be associated with a function to reset the placeholder, a function to scroll the placeholder and entry field (discussed below), for example, or another function of the device 100.

When the interaction event is associated with a placeholder altering function at 208, the process continues at 210. The placeholder altering function is a function to alter the placeholder by reducing the font size of the placeholder, repositioning the placeholder, or both reducing the font size of the placeholder and repositioning the placeholder. For example, the placeholder altering function may reduce the font size of the placeholder and reposition the placeholder above the entered text input, in response to the interaction event. Ready identification of the selected entry field is facilitated by graphically animating the resizing or movement as the placeholder is altered.

When the interaction event is not associated with a placeholder altering function at 208, the process continues at 212 and a function associated with the interaction event is performed. This function may be a function other than a placeholder altering function such as, for example a function to reset the placeholder, a function to scroll the placeholder and entry field (discussed below), or any other suitable function that may be associated with an interaction event.

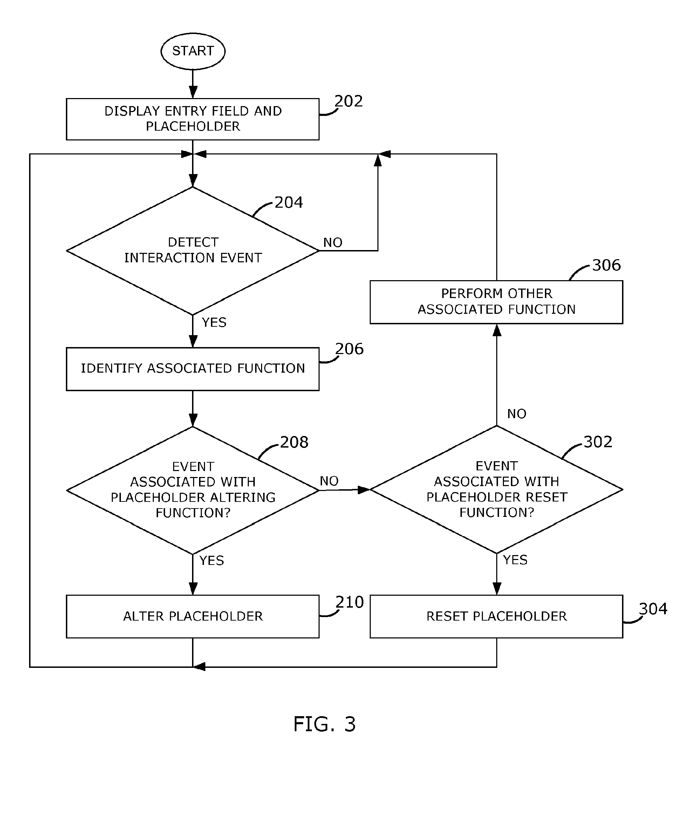

A flowchart illustrating further examples of methods of altering a placeholder for an entry field displayed on an electronic device, such as the electronic device 100, is shown in FIG. 3. These methods may be carried out by software executed by, for example, processor 102. Coding of software for carrying out such a method is within the scope of a person of ordinary skill in the art given the present description. The methods may contain additional or fewer processes than shown and/or described, and may be performed in a different order. Computer-readable code executable by at least one controller or processor of the portable electronic device to perform the methods may be stored in a computer-readable storage medium, such as a non-transitory computer-readable medium.

Information including one or more entry fields and placeholders for the entry fields is displayed on the touch-sensitive display 118 at 202 of FIG. 3. When an interaction event is detected on the device at 204, the attributes of the interaction event are determined. The interaction event may be associated with a function and the function is identified at 206 of FIG. 3. The function associated with the interaction event may be dependent on the attributes of the interaction event. For example, an interaction event may be associated with a placeholder altering function to alter the placeholder to maintain display of the placeholder for the entry field by, for example, reducing the font size of the placeholder, repositioning the placeholder, or both reducing the font size of the placeholder and repositioning the placeholder. Alternatively, an interaction event may be associated with a function to reset the placeholder (shown as 302 in FIG. 3), a function to scroll the placeholder and entry field (discussed below), for example, or another function of the device 100.

When the interaction event is associated with a placeholder altering function at 208, the process continues at 210. The placeholder altering function is a function to alter the placeholder by reducing the font size of the placeholder, repositioning the placeholder, or both reducing the font size of the placeholder and repositioning the placeholder. For example, the placeholder altering function may reduce the font size of the placeholder and reposition the placeholder above the entered text input, in response to the interaction event. Ready identification of the selected entry field is facilitated by graphically animating the resizing or movement as the placeholder is altered.

When the interaction event is associated with a placeholder reset function at 302, the process continues at 304. The placeholder reset function is a function to reset the placeholder by increasing the font size of the placeholder, repositioning the placeholder, or both increasing the font size of the placeholder and repositioning the placeholder. The placeholder reset function may also delete the text input from the entry field. For example, the placeholder altering function may delete the text input from the entry field, and reset the placeholder by increasing the font size of the placeholder and repositioning the placeholder to its original location, in response to the interaction event. Ready identification of the placeholder and entry field that is reset is facilitated by graphically animating the resizing or movement as the placeholder is altered.

When the interaction event is not associated with a placeholder altering function at 208, or a placeholder reset function at 302, the process continues at 306 and a function associated with the interaction event is performed. This function may be a function other than a placeholder altering function and a placeholder reset function such as, for example, a function to scroll the placeholder and entry field (discussed below), or any other suitable function that may be associated with an interaction event.

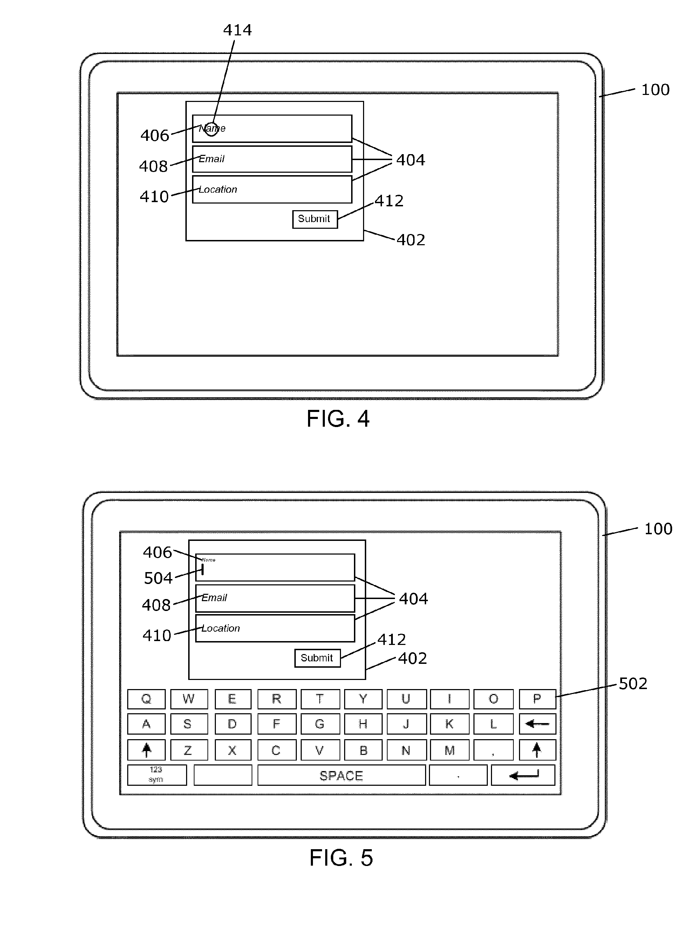

Examples of altering a placeholder for an entry field displayed on an electronic device 100 are illustrated in FIG. 4 through FIG. 12B and described with continued reference to FIG. 2. In the front view of FIG. 4, a form 402 is displayed on the touch-sensitive display 118 at 202. In the example of FIG. 4, the form 402 includes three entry fields 404, and three placeholders 406, 408, 410 representing the expected values "Name", "Email", and "Location" for the three entry fields 404, respectively. In this example, the placeholders 406, 408, 410 are brief descriptions of the expected text input to be entered in the associated entry fields 404. The form 402 may include a submit button 412 to electronically submit the text input entered in the entry fields 404.

An interaction event is detected at 204 and the attributes of the interaction event may be determined. In the example of FIG. 4, an interaction event is a touch illustrated by a circle 414 at a location on the touch-sensitive display 118 that is associated with the first of the entry fields 404 and the "Name" placeholder 406. The placeholder altering function is a function to alter the placeholder by reducing the font size of the associated placeholder 406, repositioning the placeholder 406, or both reducing the font size of the placeholder 406 and repositioning the placeholder 406. The placeholder is altered at 210. The change is illustrated in FIG. 5.

In the example illustrated in FIG. 5, responsive to the touch illustrated by the circle 414, a placeholder altering function, identified at 206, alters the "Name" placeholder 406 from the standard placeholder (shown as 406 in FIG. 4) to a reduced size placeholder (shown as 406 in FIG. 5). In particular, the "Name" placeholder 406 is altered from a first font size to a second, reduced font size. As well, the "Name" placeholder 406 is repositioned above a cursor 504 that provides an indication of where text input is placed when entered. Furthermore, in the example illustrated in FIG. 5, responsive to the touch illustrated by the circle 414, a keyboard display function (not shown in FIG. 2), displays a virtual keyboard 502 for entry of text input in the entry fields 404. The virtual keyboard may be displayed in landscape or portrait orientation. For the purpose of this example, a landscape orientation is illustrated.

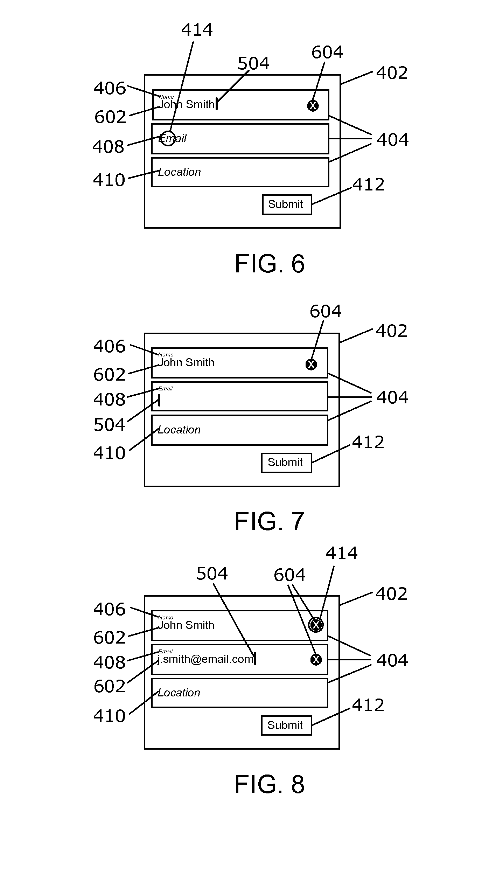

FIG. 6 through FIG. 10 illustrate enlarged views of the form 402 of FIG. 4. In the example illustrated in FIG. 6, the text input "John Smith" is received for the first of the entry fields 404. Responsive to the receipt of text input, a delete button 604 may be displayed to provide the user with a convenient way to delete the text input of the entry field. Further interaction events may be detected as the user completes the form 402, such as, for example, the touch illustrated by the circle 414 at a location on the touch-sensitive display 118 that is associated with the second of the entry fields 404 and the "Email" placeholder 408. Responsive to the touch illustrated by the circle 414, the "Email" placeholder 408 is altered at 210. As shown in FIG. 7, the "Email" placeholder 408 is altered from a first font size to a second, reduced font size, and repositioned above cursor 504. In the example illustrated in FIG. 8, the text input "j.smith@email.com" is received for the second of the entry fields 404. Should the user leave and return to the form 402 at a later time, the altered placeholders 406, 408 readily provide the user with an indication of the label for the entered text input.

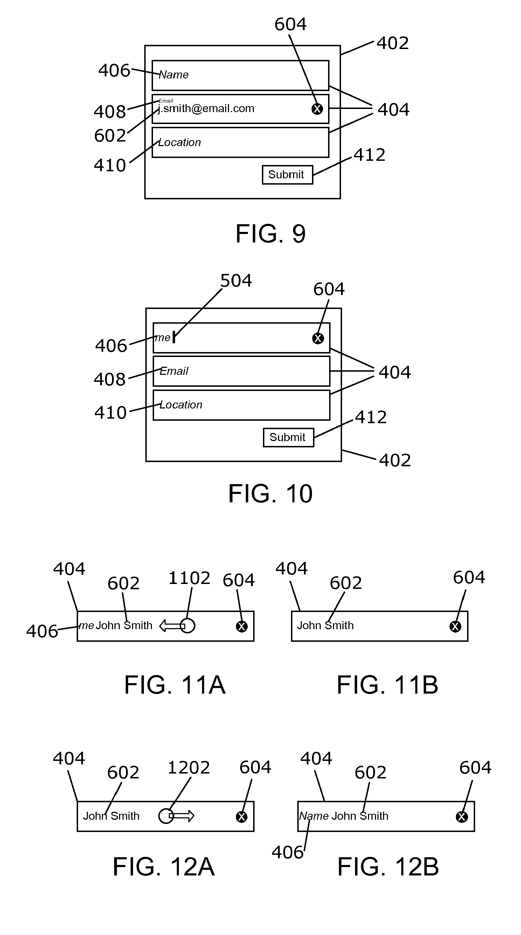

Selection of one of the delete buttons 604 causes the entered text input to be deleted. In the example shown in FIG. 8, the touch illustrated by the circle 414 selects the delete button 604 associated with the first of the entry fields 404. Responsive to the touch illustrated by the circle 414, the "Name" placeholder 406 is reset at 304. As shown in FIG. 9, the text input of the first of the entry fields 404 is deleted, and the "Name" placeholder 406 is reset from the second, reduced font size to the first font size, reverting to its original location shown in FIG. 4.

In a further example shown in FIG. 10, responsive to the touch illustrated by the circle 414, a placeholder altering function, identified at 206, may alter a placeholder by scrolling the placeholder so that a part of the placeholder is not displayed. For example, the "Name" placeholder 406 (shown in FIG. 10) retains the same font size but is scrolled or repositioned so that the "Na" part is not displayed. The visible part of the "Name" placeholder 406, the "me" part, is maintained to provide a hint or clue of the expected text input to be entered. In one example, shown in FIG. 11A and FIG. 11B, a swipe illustrated by the circle and directional arrow 1102 that is associated with the first of the entry fields 404 and the "Name" placeholder 406 may be detected, causing the "Name" placeholder 406 to be scrolled and hidden from display, as shown in FIG. 11B. As shown in FIG. 12A and 12B, a further swipe illustrated by the circle and directional arrow 1202 may be detected, causing the "Name" placeholder 406 to be scrolled back and displayed, as shown in FIG. 12B.

A method includes displaying information on a display of an electronic device, the information comprising an entry field and a placeholder for the entry field, detecting a first interaction event in relation to the entry field, and when the first interaction event is associated with a placeholder altering function, altering the placeholder to maintain display of the placeholder for the entry field.

An electronic device includes a touch-sensitive display and at least one processor coupled to the touch-sensitive display and configured to display information on a display of an electronic device, the information comprising an entry field and a placeholder for the entry field, detect a first interaction event in relation to the entry field, and when the first interaction event is associated with a placeholder altering function, alter the placeholder to maintain display of the placeholder for the entry field.

The first interaction event includes receipt of text input for the entry field or a command selected from one of a click, touch, gesture, swipe, and tabbing navigation. Where the first interaction event includes receipt of text input for the entry field, the method further includes displaying the entered text input in the entry field. The first interaction event may be associated with a keyboard display function to display a virtual keyboard for entry of text for the entry field. The placeholder may be a sample text input or brief description of the expected text input to be entered. Altering the placeholder includes reducing the font size of the placeholder and/or repositioning the placeholder. The placeholder may be scrolled so that a part of the placeholder is not displayed. The placeholder may be altered from a first placeholder to a second, reduced size placeholder. Altering the placeholder may include graphically animating the altering of the placeholder from the first placeholder to the second, reduced size placeholder.

The method may include displaying a reset control element, detecting a second interaction event in relation to the reset control element, and when the second interaction event is associated with a placeholder reset function, altering the placeholder from the second, reduced size placeholder to the first placeholder. When the second interaction event is associated with a placeholder reset function, the method may include deleting entered text input from the entry field. The reset control element may include a delete button. Resetting the placeholder may include graphically animating the altering of the placeholder from the second, reduced size placeholder to the first placeholder.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
displaying information on a display of an electronic device, the information comprising an entry field and a placeholder for the entry field;
detecting a first interaction event in relation to the entry field; and
when the first interaction event is associated with a placeholder altering function,
altering the placeholder to maintain display of the placeholder for the entry field.

2. A method according to claim 1, wherein the first interaction event comprises one of:
receipt of text input for the entry field or a command selected from one of a click, touch, gesture, swipe, and tabbing navigation;
receipt of text input for the entry field, and the method further comprises displaying the entered text input in the entry field.

3. The method according to any preceding claim, wherein the placeholder is a sample text input or brief description of the expected value to be entered.

4. The method according to claim 1, further comprising, when the first interaction event is associated with a keyboard display function to display a virtual keyboard for entry of text for the entry field.

5. The method according to any preceding claim, wherein altering the placeholder comprises one of:
reducing the font size of the placeholder;
repositioning the placeholder;
reducing the font size of the placeholder and repositioning the placeholder;
scrolling the placeholder so that a part of the placeholder is not displayed.

6. The method according to claim 1, wherein the placeholder is altered from a first placeholder to a second, reduced size placeholder.

7. The method according to claim 6, wherein altering the placeholder comprises graphically animating the altering of the placeholder from the first placeholder to the second, reduced size placeholder.

8. The method according to claim 6, wherein the method further comprises:
displaying a reset control element;
detecting a second interaction event in relation to the reset control element;
when the second interaction event is associated with a placeholder reset function, altering the placeholder from the second, reduced size placeholder to the first placeholder.

9. The method according to claim 8, wherein the method further comprises:
when the second interaction event is associated with a placeholder reset function, deleting entered text input from the entry field.

10. The method according to claim 8, wherein the reset control element comprises a delete button.

11. The method according to claim 8, wherein resetting the placeholder comprises graphically animating the altering of the placeholder from the second, reduced size placeholder to the first placeholder.

12. A computer-readable medium having computer-readable code executable by at least one processor of a portable electronic device to perform the method according to any preceding claim.

13. An electronic device comprising:
a touch-sensitive display;
at least one processor coupled to the touch-sensitive display and configured to carry out the method steps of any one of claims 1 to 11.
